# EUROPEAN PATENT SPECIFICATION

(11) **EP 2 515 202 B1**
(45) Date of publication and mention of the grant of the patent: **18.12.2019**
(21) Application number: 12164230.0
(22) Date of filing: 16.04.2012
(51) Int. Cl.: G06F 21/60, G06F 3/0488

(54) **File processing system and management device**
Datenverarbeitungssystem und -verwaltungsvorrichtung
Système de traitement de fichier et dispositif de gestion

(30) Priority: 19.04.2011 JP 2011093102
(43) Date of publication of application: 24.10.2012
(73) Proprietor: Konica Minolta Business Technologies, Inc., Chiyoda-ku Tokyo 100-0005 (JP)
(72) Inventor: Tajima, Hiroki, Tokyo, 100-0005 (JP); Akita, Katsuhiko, Tokyo, 100-0005 (JP); Imaizumi, Shoji, Tokyo, 100-0005 (JP); Hama, Kenro, Tokyo, 100-0005 (JP)
(74) Representative: Hoffmann Eitle

(56) References cited:
- US-A1- 2010 257 251
- US-A1- 2011 083 111

## Description

This application is based on Japanese Patent Application No. 2011-093102 filed with the Japan Patent Office on April 19, 2011 .

### BACKGROUND OF THE INVENTION

### Field of the Invention

The present invention relates to a file processing system and a management device, and particularly to a file processing system and a management device which process a file by a workflow.

### Description of the Related Art

There is a so-called workflow file, which is a file sequentially processed by a plurality of users, as disclosed in Japanese Laid-Open Patent Publication No. 2006-301742. That workflow file includes data defining the order of users who process, in addition to target data. The users access that data in the defined order to cause necessary processing to be executed. This processing is also called a workflow.

However, when executing such a workflow, a user needs to find out the order of processing previously, and needs to perform a manipulation for his/her own processing upon checking that a preceding user has terminated processing. This complicates the operation.

In the case where the processing is to be taken over from a preceding user to a subsequent user by a predetermined manipulation, it is necessary to find out the subsequent user who will take over the processing, and to perform an operation for indicating the subsequent user and taking over the processing. This also complicates the operation.

Further, when changing the order of processing of the workflow for some reason, it is usually necessary to change the above-mentioned data defining the order of users. Only a specific user, such as a user having predetermined authority (e.g., an administrator), can perform the processing for change. Therefore, a conventional workflow in which the order of processing has been defined previously does not meet the need for executing a series of operations of a workflow in a free order.

### SUMMARY OF THE INVENTION

The present invention was made in view of such problems, and has an object to provide a file processing system capable of executing a workflow of high usability, and a management device used for that file processing system.

To achieve the above-mentioned object, a file processing system according to an aspect of the present invention is a file processing system for processing a workflow file, including the features of claim 1.

In US 2011/0083111 A1 there are described user interface gestures and methods for providing file sharing functionality enabling users to share files with other nearby computing devices. The file sharing functionality may include establishing wireless links with nearby devices and determine their relative locations. The computing device may detect a file sharing gesture and transmit files to or request files from a nearby device in response to the gesture. Base on gesture parameters, e.g., direction, speed and shape, and computing device attitude parameters, e.g., tilt angle and pointing direction, the computing device may identify a targeted device to which a file may be transmitted. The computing device may request user verification of the identified device and send a request to transmit files to the targeted device. The computing devices may transmit files using networks and addresses provided over the device-to-device communication links.

In US 2010/0257251 A1 there is described a file sharing between devices. Methods and systems for transferring an object from a sending device to a recipient device comprise determining at least one catching device associated with the recipient for receiving the object, receiving on the sending device a user gesture representing a flick of a displayed object, transferring the object from the sending device directly to the catching device of the recipient when the catching device is in proximity of the sending device, and when the catching device is not in proximity of the sending device, transferring the object to a server for forwarding of the object to the recipient.

cancelled.

A management device according to still another aspect of the present invention is a management device for managing processing of a workflow file in a file processing device, including the features of claim 5.

A management device according to still another aspect of the present invention is a management device for managing processing of a workflow file in a file processing device, including the features of claim 14.

A control program according to claim 17 is a program for controlling a management device to cause the management device to execute a process of managing processing of a workflow file in a plurality of file processing devices connected communicably with one another.

cancelled.

cancelled.

cancelled.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows a specific example of a configuration of a file processing system according to an embodiment.
Fig. 2 shows a specific example of a hardware configuration of a management device, which is MFP (Multi-Functional Peripheral), included in the file processing system according to the embodiment.
Fig. 3 shows a specific example of a hardware configuration of a file processing device, which is a portable terminal, included in the file processing system according to the embodiment.
Fig. 4 shows the outline of an operation for file processing in a file processing system according to a first embodiment.
Fig. 5 illustrates a pinch-in gesture.
Fig. 6 illustrates a pinch-out gesture.
Fig. 7 illustrates a fly gesture.
Fig. 8 is a diagram showing a specific example of a functional configuration of a file processing device for achieving operations in the file processing system according to the first embodiment.
Figs. 9 to 13 each illustrate a specific example of a method of identifying an icon subjected to the pinch-in gesture.
Fig. 14 is a diagram showing a specific example of a functional configuration of the management device for achieving operations in the file processing system according to the first embodiment.
Fig. 15 is a flow chart showing a specific example of an operation in the management device according to the first embodiment.
Fig. 16 is a block diagram showing a specific example of a functional configuration of a management device according to a variation of the first embodiment.
Fig. 17 shows a specific example of a selection screen presenting users available as a target of delegation.
Fig. 18 shows the outline of an operation for file processing in a file processing system according to a second embodiment.
Fig. 19 is a flow chart showing a specific example of an operation in a management device according to the second embodiment.

### DESCRIPTION OF THE PREFERRED EMBODIMENTS

Hereinafter, embodiments of the present invention will be described with reference to the drawings. In the following description, like parts and components are denoted by like reference characters. They are named and function identically as well.

### <System Configuration>

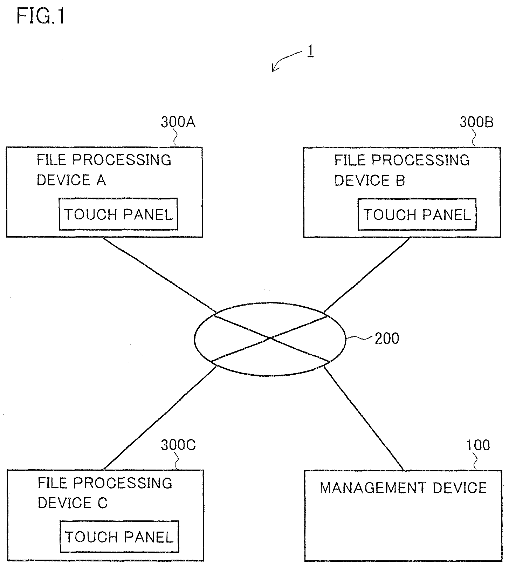

Fig. 1 shows a specific example of a configuration of a file processing system 1 according to the present embodiment.

Referring to Fig. 1, file processing system 1 according to the present embodiment includes a management device 100 and a plurality of file processing devices 300A, 300B, and 300C, ... (representatively referred to as a file processing device 300), connected through a network 200, such as LAN (Local Area Network) or the Internet.

Management device 100 is a device that functions as a server, and may be implemented by a typical personal computer or by an image forming apparatus, such as MFP (Multi-Functional Peripheral). One of file processing devices 300 may function as management device 100. The present example will be described assuming that management device 100 is implemented by MFP.

File processing device 300 may be any device as long as it has a function for processing a file and a communication function. That is, it may be implemented by a typical personal computer or by a portable terminal, such as a mobile phone. The present example will be described assuming that file processing device 300 is implemented by a portable terminal, such as a mobile phone, and that the portable terminal has a touch panel as an operation unit.

### <Device Configuration of Management Device>

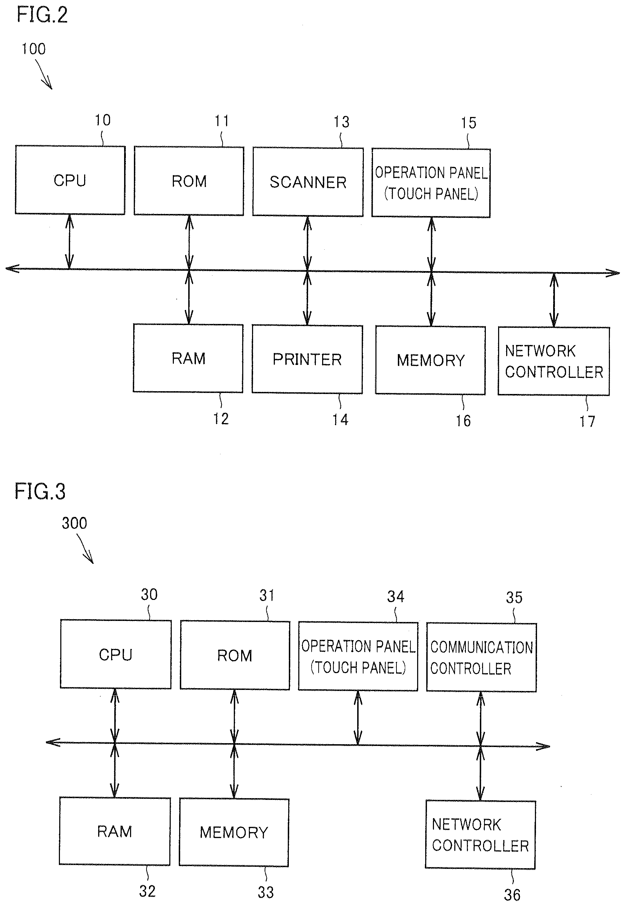

Fig. 2 shows a specific example of a hardware configuration of management device 100 which is MFP.

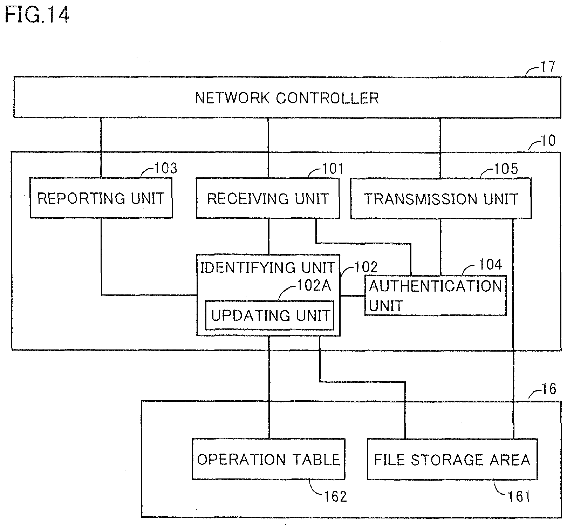

Referring to Fig. 2, management device 100 which is MFP includes a CPU (Central Processing Unit) 10 as an arithmetic device for overall control, a ROM (Read Only Memory) 11 for storing programs and the like to be executed by CPU 10, a RAM (Random Access Memory) 12 for functioning as a working area during execution of a program by CPU 10, a scanner 13 for optically reading a document placed on a document table not shown to obtain image data, a printer 14 for fixing image data on a printing paper, an operation panel 15 including a touch panel for displaying information and receiving an operation input to management device 100 concerned, a memory 16 for storing information and/or programs including a file storage area 161 (cf. Fig. 14) for storing a file of image data and the like, and a network controller 17 for controlling communications through network 200.

Operation panel 15 includes the touch panel and an operation key group not shown. The touch panel is composed of a display device such as a liquid crystal display and a pointing device such as an optical touch panel or a capacitance touch panel, the display device and the pointing device overlapping each other, and displays an operation screen so that an indicated position on the operation screen is identified. CPU 10 causes the touch panel to display the operation screen based on data stored previously for causing screen display.

The indicated position (position of touch) on the touch panel as identified and an operation signal indicating a pressed key are input to CPU 10. CPU 10 identifies details of manipulation based on the pressed key or the operation screen being displayed and the indicated position, and executes a process based thereon.

It is noted that although in the present example, management device 100 which is MFP shall have operation panel 15 which is a touch panel as an operation unit and a display unit, the configuration of the operation unit and the display unit is not limited to this configuration, but may be a typical key and display.

### <Configuration of File Processing Device>

Fig. 3 shows a specific example of a hardware configuration of file processing device 300 which is a portable terminal.

Referring to Fig. 3, file processing device 300 includes a CPU 30 as an arithmetic device for overall control, a ROM 31 for storing programs and the like to be executed by CPU 30, a RAM 32 for functioning as a working area during execution of a program by CPU 30, a memory 33 for storing a file and the like, an operation panel 34 including a touch panel for displaying information and receiving an operation input to file processing device 300 concerned, a communication controller 35 for controlling communications through telephone lines by communicating with a base station not shown, and a network controller 36 for controlling communications through network 200.

Operation panel 34 may have a configuration similar to that of operation panel 15 of management device 100. That is, as an example, operation panel 34 includes a touch panel composed of a display device such as a liquid crystal display and a pointing device such as an optical touch panel or a capacitance touch panel, the display device and the pointing device overlapping each other.

CPU 30 causes the touch panel to display an operation screen based on data stored previously for causing screen display. On the touch panel, the indicated position on the operation screen is identified, and an operation signal indicating that position is input to CPU 30. CPU 30 identifies details of manipulation based on the operation screen being displayed and the indicated position, and executes a process based thereon.

### [First Embodiment]

### <Outline of Operations>

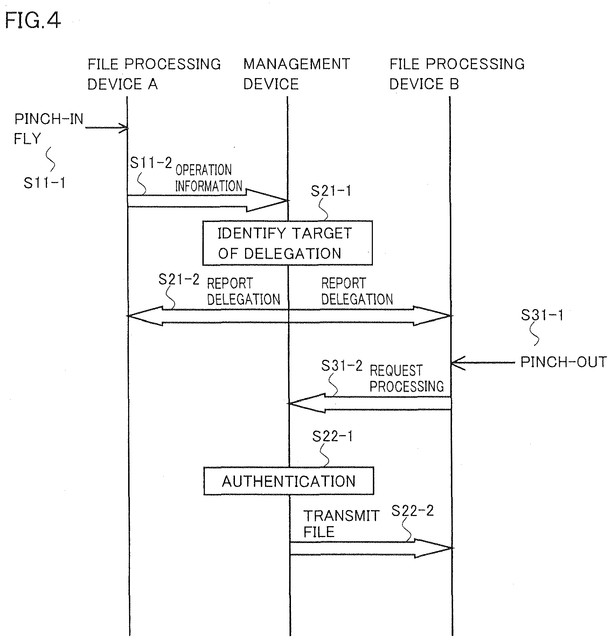

Fig. 4 shows the outline of an operation for file processing in file processing system 1 according to the first embodiment.

As a precondition, management device 100 according to the first embodiment has a file for workflow processing (hereinafter referred to as a workflow file) stored in file storage area 161 of memory 16. The workflow file includes a file body and information defining users who can process that file (hereinafter referred to as defining information).

Memory 16 has stored therein an operation table 162 in which correspondence between the direction indicated by a "fly gesture" as a third gesture to be described later and a user is stored. Operation table 162 may be stored previously, or may be created and/or updated by a specific user operation.

A user accesses management device 100 using file processing device 300 to which he/she has logged in, and when authentication in management device 100 succeeds, the user can receive body data of the workflow file from management device 100 and perform necessary processing. In the description below, a state in which a workflow file is processable for a user will be called "a state having authority", and a state in which the processable state is transferred to a subsequent user will be defined as "delegate authority."

Referring to Fig. 4, in file processing device 300A (a file processing device A in the drawing) to which a user having authority to process a workflow file has logged in and which is being operated by the user, the user performs a first gesture on an icon presenting the workflow file for instructing termination of processing of the workflow, and then performs a second gesture for indicating a target of delegation of authority.

The first and second gestures are not limited to specific gestures as long as they can be made on operation panel 34 which is a touch panel. In the present example, however, the first gesture shall be a "pinch-in gesture" and the second gesture shall be a "fly gesture", as a suitable example. The details of gestures will be described later.

When the user performs these gestures (Step S11-1), a direction indicated by the "fly gesture" is identified, and the body data and the direction indicated by the "fly gesture" is transmitted to management device 100 as operation information (Step S11-2).

Management device 100, upon receipt of the information, updates body data of the workflow file stored in file storage area 161 with the received body data. The login user of file processing device 300A updates the defining information included in the workflow file as having been processed.

Management device 100 identifies a user indicated by the user of file processing device 300A to whom authority is to be delegated, based on the direction indicated by the "fly gesture" included in the received operation information and the defining information included in the workflow file. Then, the identified user targeted for delegation is reported to file processing device 300A, while file processing device 300B to which the user targeted for delegation previously stored has logged in (a file processing device B in the drawing) (or file processing device 300B previously stored in correspondence with that user) is informed of having been determined as the target of delegation (Step S21-2).

The user targeted for delegation logs in to file processing device 300B and performs the third gesture for requesting processing of the workflow file on operation panel 34. The third gesture is not limited to a specific gesture as long as it can be made on operation panel 34 which is a touch panel. In the present example, however, it shall be a "pinch-out gesture" as a suitable example. The details of gesture will be described later.

When the user performs such a gesture (Step S31-1), a request for processing the workflow file is transmitted from file processing device 300B to management device 100 (Step S32-2).

In management device 100, upon receipt of the processing request from file processing device 300B, conducts authentication whether or not the login user is the user targeted for delegation using information that identifies the login user of file processing device 300B (Step S22-1), and when the authentication succeeds, transmits body data of the workflow file to file processing device 300B (Step S22-2). The user is thereby allowed to process the workflow file in file processing device 300B.

### <Description of Gesture>

Here, the "pinch-in gesture", the "pinch-out gesture" and the "fly gesture" will be described.

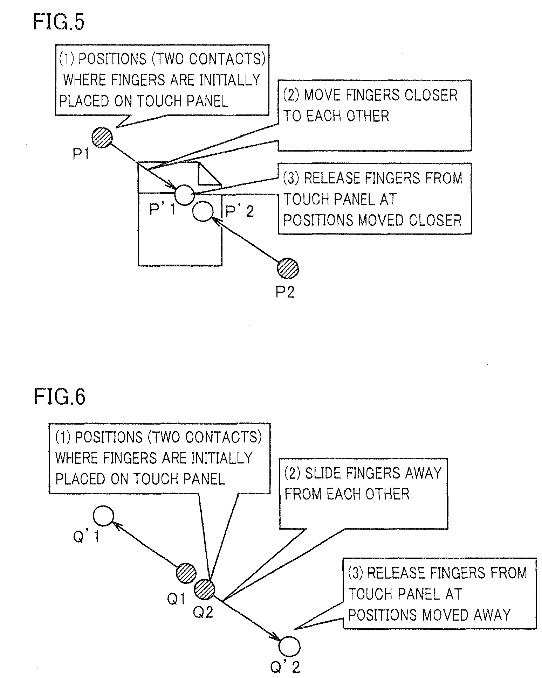

Fig. 5 illustrates a "pinch-in (pinch-close)" gesture. Referring to Fig. 5, the "pinch-in" or pinching gesture refers to a motion of making two contacts P1 and P2 on the touch panel using, for example, two fingers or the like, and then moving the fingers closer to each other from their initial positions linearly or substantially linearly, and releasing the two fingers from the touch panel at two contacts P'1 and P'2 moved closer. That is, the "pinch-in gesture" refers to a motion of, continuously after two contacts are made on the touch panel, moving the two contacts in the direction that the spacing therebetween is decreased and then releasing the two contacts after being moved.

When it is detected that two contacts P1 and P2 on the touch panel have been made simultaneously, and further, the respective contacts have been continuously displaced from their initial positions linearly or substantially linearly, and both the contacts have been released almost simultaneously at two contacts P'1 and P'2 positioned at a spacing narrower than the spacing between their initial positions, CPU 10 detects that the "pinch-in" gesture has been performed.

Fig. 6 illustrates a "pinch-out (pinch-open)" gesture. Referring to Fig. 6, the "pinch-out" or anti-pinching gesture refers to a motion of making two contacts Q1 and Q2 on the touch panel using, for example, two fingers or the like, and then moving the fingers away from their initial positions linearly or substantially linearly, and releasing the two fingers from the touch panel at two contacts Q'1 and Q'2 moved away to some degree. That is, the "pinch-out gesture" refers to a motion of, continuously after two contacts are made on the touch panel, moving the two contacts in the direction that the spacing therebetween is increased and then releasing the two contacts after being moved.

When it is detected that two contacts Q1 and Q2 on the touch panel have been made simultaneously, and further, the respective contacts have been continuously displaced from their initial positions linearly or substantially linearly, and both the contacts have been released almost simultaneously at two contacts Q'1 and Q'2 positioned at a spacing wider than the spacing between their initial positions, CPU detects that the "pinch-out" or de-pinching gesture has been performed.

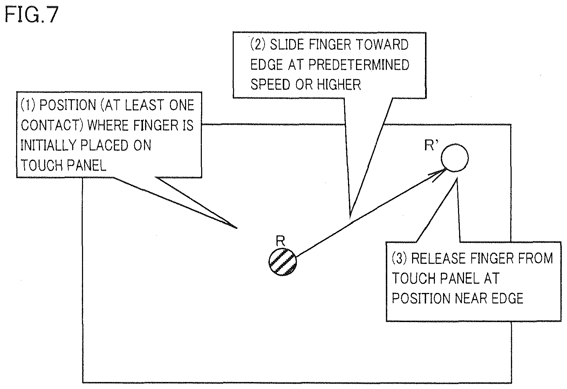

Fig. 7 illustrates the "fly gesture." Referring to Fig. 7, the "fly gesture" refers to a motion of indicating at least one point R on the touch panel using, for example, one finger or the like, and then sliding the finger from that position linearly or substantially linearly toward the edge of the touch panel at a predetermined speed or higher and releasing the finger from the touch panel at a point R' near the edge of the touch panel. More specifically, the "fly gesture" refers to a motion of, continuously after at least one contact is made on the touch panel, moving the contact toward the edge of the touch panel at a predetermined speed or higher, and then releasing the contact at or near the edge of the touch panel.

When it is detected that point R on the touch panel has been indicated and the contact has been displaced continuously from that position linearly or substantially linearly toward the edge of the touch panel at a predetermined speed or higher, and then the contact has been released at point R' near the edge of the touch panel, CPU detects that the fly gesture has been performed.

### <Functional Configuration>

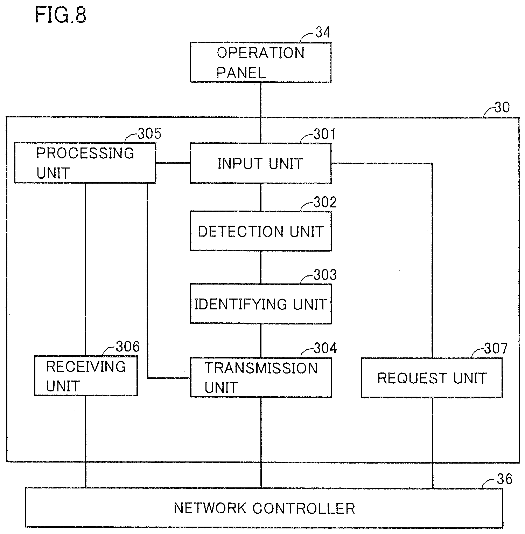

Fig. 8 is a diagram showing a specific example of a functional configuration of file processing device 300 for achieving the above-described operations in file processing system 1 according to the first embodiment. Each function shown in Fig. 8 is a function mainly configured in CPU 30 by CPU 30 reading a program stored in ROM 31 and executing the program on RAM 32. However, at least some functions may be configured by the hardware configuration shown in Fig. 3.

Referring to Fig. 8, as functions for achieving the above-described operations, file processing device 300 includes an input unit 301 for receiving input of an operation signal indicating an instruction on operation panel 34, a detection unit 302 for detecting the above-described gestures based on the operation signal, a processing unit 305 for executing processing of a workflow file based on the operation signal indicating typical instructions on operation panel 34, an identifying unit 303 for, when the pinch-in gesture and the fly gesture are made, identifying an icon subjected to the pinch-in gesture to identify a target workflow file while identifying the direction indicated by the fly gesture, a transmission unit 304 having management device 100 previously stored therein as a destination, and when the pinch-in gesture and the fly gesture are made, transmitting the direction indicated by the fly gesture and body data of the workflow file having been processed in processing unit 305 as operation information to management device 100 through network controller 36, a receiving unit 306 for receiving the body data of the workflow file from management device 100 through network controller 36, and a request unit 307 having management device 100 previously stored therein as a requester, and when the pinch-out gesture is made, sending a request for processing the workflow to management device 100 through network controller 36.

As an example, CPU 10 of file processing device 300A identifies an icon, displayed in an area defined based on at least either two contacts (two contacts P1, P2 in Fig. 5) indicated initially in the pinch-in gesture or two contacts (two contacts P'1, P'2 in Fig. 5) indicated finally, as an icon subjected to the pinch-in gesture.

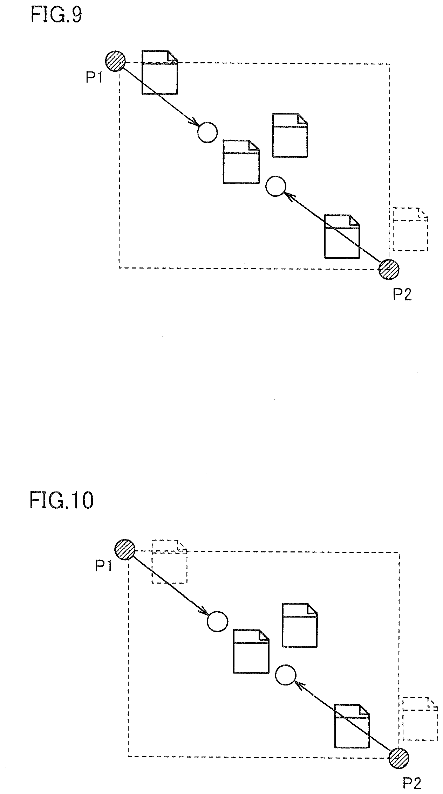

The method of identifying an icon subjected to the pinch-in gesture in identifying unit 303 is not limited to a certain method. Figs. 9 to 13 each illustrate a specific example of a method of identifying an icon subjected to the pinch-in gesture in identifying unit 303.

As an example, as shown in Fig. 9, identifying unit 303 may identify a rectangle in which two contacts P1 and P2 indicated initially are at opposite corners as an area defined by the pinch-in gesture, and may identify icons, each of which is at least partially included in that rectangle, may be identified as target icons. Alternatively, as shown in Fig. 10, a rectangle in which two contacts P1 and P2 indicated initially are at opposite corners may be identified as an area defined by the pinch-in gesture, and icons completely included in that rectangle may be identified as target icons. With such identification, the user touches operation panel 34 with two fingers so as to sandwich an intended icon, and performs a motion for the pinch-in gesture from that state, so that the intended icon can thus be a target of processing in an intuitive manner. Even when an icon image is small, it can be indicated correctly.

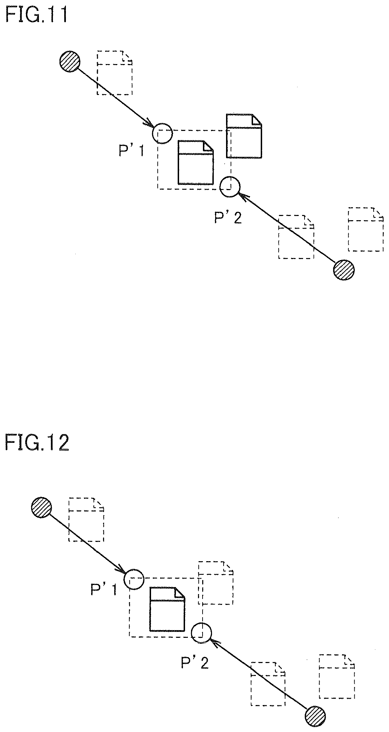

As another example, as shown in Fig. 11, identifying unit 303 may identify a rectangle in which two contacts P'1 and P'2 indicated finally are at opposite corners as an area defined by the pinch-in gesture, and may identify icons, each of which is at least partially included in that rectangle, may be identified as target icons. Alternatively, as shown in Fig. 12, a rectangle in which two contacts P'1 and P'2 indicated finally are at opposite corners may be identified as an area defined by the pinch-in gesture, and an icon completely included in that rectangle may be identified as a target icon. With such identification, the user touches operation panel 34 with two fingers spaced apart, and then moves them closer to each other so that an intended icon is sandwiched finally between the two fingers. The intended icon can thus be a target of processing in an intuitive manner. Even when an icon image is small, it can be indicated correctly.

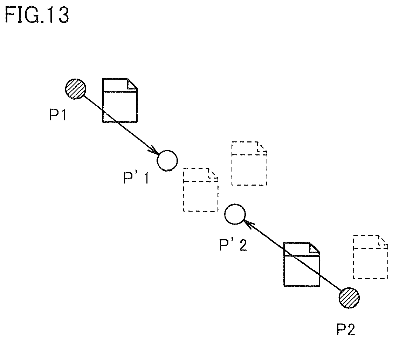

As still another example, as shown in Fig. 13, identifying unit 303 may identify two lines that connect two contacts PI, P2 indicated initially and two contacts P'1, P'2 indicated finally, respectively, as areas defined by the pinch-in gesture, and may identify icons where either one line overlaps as target icons. With such identification, the user moves the two fingers so as to pinch in an intended icon, so that the intended icon can thus be a target of processing in an intuitive manner. The file to be transferred can thus be a target of processing in an intuitive manner. Even when an icon image is small, it can be indicated correctly.

The method of identifying the direction indicated by the fly gesture in identifying unit 303 is not limited to a certain method. As an example, the angle formed by an initially indicated point (R in Fig. 7) and a point where the contact is released (R' in Fig. 7) may be identified as the direction indicated by the fly gesture. As another example, an edge of operation panel 34 closest to the point where the contact is released (R' in Fig. 7) may be identified for the direction indicated by the fly gesture.

Fig. 14 is a diagram showing a specific example of a functional configuration of management device 100 for achieving the above-described operations in file processing system 1 according to the first embodiment. Each function shown in Fig. 14 is a function mainly configured in CPU 10 by CPU 10 reading a program stored in ROM 11 and executing the program on RAM 12. However, at least some functions may be configured by the hardware configuration shown in Fig. 2.

Referring to Fig. 14, as functions for achieving the above-described operations, management device 100 includes a receiving unit 101 for receiving information transmitted from file processing device 300 through a network controller 17, an identifying unit 102 for, when the received information is the above-described operation information, using body data of a workflow file included therein to update body data of that workflow file stored in file storage area 161, while identifying a user included in the received information corresponding to the direction indicated by the fly gesture referring to operation table 162, a reporting unit 103 for reporting an identified target of delegation to file processing device 300 having received the operation information and file processing device 300 to which the user targeted for delegation has logged in (or previously stored in association with the user targeted for delegation) through network controller 17, an authentication unit 104 for, when the received information requests processing of the workflow file, conducting authentication whether or not the login user of file processing device 300 having transmitted that request is the user identified by identifying unit 102, and a transmission unit 105 for transmitting the body data of the workflow file to the user targeted for delegation through network controller 17 when the authentication succeeds.

Further, identifying unit 102 preferably includes an updating unit 102A for updating defining information of the file included in the workflow file based on information that identifies the user having performed the pinch-in gesture included in the above-described operation information. That the user has already performed processing for the workflow file will thereby be written in this information.

Preferably, identifying unit 102 identifies a user corresponding to the direction indicated by the fly gesture referring to operation table 162, and then referring to the defining information of the file included in the workflow file, determines whether or not the identified user has already performed processing for the workflow file. When it is determined that the user has not performed processing yet, the identified user is determined as a user targeted for delegation.

It is noted that, when it is determined that the user has already processed the workflow file, an error may be returned to file processing device 300A. Alternatively, a user who has not performed processing yet may be identified referring to the defining information of the file, and the user may be reported to file processing device 300A.

Authentication unit 104 stores the user targeted for delegation identified by identifying unit 102, and when the information that requests processing of the workflow file is received from file processing device 300B, conducts authentication whether or not the user is the user targeted for delegation using the information that identifies the login user of file processing device 300B included in that information. At that time, authentication unit 104 preferably stores the target of delegation in association with information that identifies the workflow. Then, targets of delegation can be stored for each of a plurality of workflows.

### <Flow of Operation>

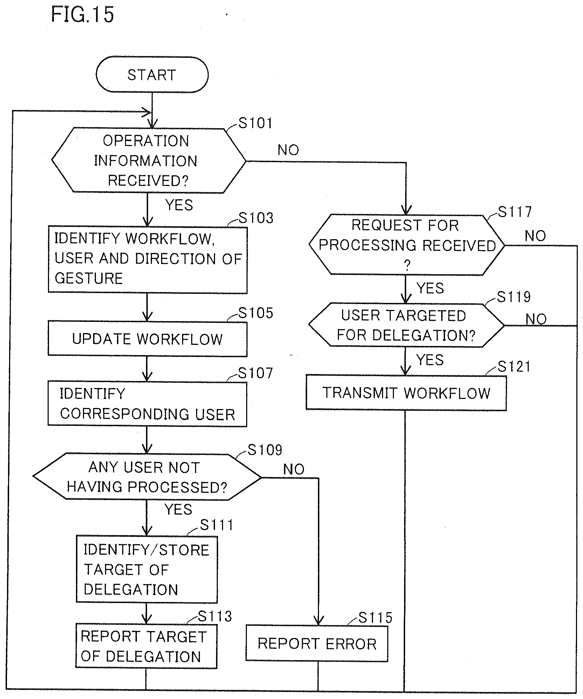

Fig. 15 is a flow chart showing a specific example of an operation in management device 100 according to the first embodiment. The operation shown in the flow chart of Fig. 15 is implemented by CPU 10 reading a program stored in ROM 11, executing the program on RAM 12, and causing the respective functions shown in Fig. 14 to be effected.

Referring to Fig. 15, when operation information in accordance with the pinch-in gesture and the fly gesture is received from file processing device 300A (YES in Step S101), CPU 10 in Step S103 identifies a target workflow file, a user having performed the gestures, and the direction indicated by the fly gesture having been performed in file processing device 300A based on the received operation information. Then, in Step S105, CPU 10 updates the body data of the workflow file stored in file storage area 161 using the body data included in the received operation information, while updating the defining information of the workflow file assuming that the user having performed the above-described gestures has processed the workflow file.

In Step S107, CPU 10 identifies a user corresponding to the direction indicated by the fly gesture referring to operation table 162 of memory 16. In the case where the user is a user who has not yet processed the workflow file referring to the defining information of the workflow file, CPU 10 in Step Sill identifies the identified user as a target of delegation, and stores the user temporarily. Then, in Step S113, CPU 10 reports to file processing device 300A and file processing device 300B to which the user identified in Step S111 has logged in (or which is stored previously in association with the user) that the user has been identified as a target of delegation. It is noted that, at that time, the user identified in above-described step S103 having previously processed the workflow file may also be reported to file processing device 300B. Then, the user targeted for delegation can find out from which user the authority to process the workflow file has been delegated, and can omit this user when identifying a user targeted for delegation subsequently.

It is noted that, in the case where the user corresponding to the direction indicated by the fly gesture identified in above-described Step S107 has already processed the workflow file (YES in Step S109), CPU 10 in Step S115 reports an error to file processing device 300A. At this time, a user who has not yet processed may be identified referring to the defining information of the workflow file, and an error may be reported together with information that identifies this user. Then, the user having performed processing previously can select a user to be targeted for delegation from among users who have not yet performed processing.

A series of operations when operation information is received is then terminated, and the process is returned to the beginning, where receipt of information from file processing device 300 is waited for.

When information that requests processing of a workflow in accordance with the pinch-out gesture is received from file processing device 300B (NO in Step S101 and YES in Step S117), CPU 10 conducts authentication whether or not a login user of file processing device 300 having made that request matches the user identified in above-described Step S111 as the target of delegation. As a result, when a match with the user identified as the target of delegation occurs (YES in Step S119), CPU 10 in Step S121 transmits the body data of the workflow to file processing device 300B.

A series of operations when operation information is received is then terminated, and the process is returned to the beginning, where receipt of information from file processing device 300 is waited for.

It is noted that the flow chart of Fig. 15 shows that, when the user having requested processing of the workflow file does not match the user identified as the target of delegation (NO in Step S119), Step S121 is skipped to return the process to the beginning. As another example, an error may be reported to file processing device 300B. When this user is not a user targeted for delegation but a user who has not yet performed the workflow file, a report may be sent to file processing device 300A to check whether or not the authority to process the workflow file is delegated to that user.

When a request for processing of the workflow file is not made within a prescribed time (e.g., one day, etc.) from the user targeted for delegation identified in above-described Step S111, a report may be sent again to the user targeted for delegation, or an error may be reported to file processing device 300A.

### <Effects of Embodiment>

With the above-described operations being performed in file processing system 1 according to the first embodiment, the user having processed the workflow file can easily delegate the authority to another user without checking users defined as being able to process that workflow file.

By adopting the pinch-in gesture, the fly gesture and the pinch-out gesture as gestures performed at this time, users can exchange the authority of the workflow file with intuitive and easy manipulations.

Further, the workflow file according to the first embodiment merely defines users who can perform processing, and the order of processing is not defined. Then, when a user indicated as a subsequent user is determined in management device 100 as a user who has not yet processed the workflow file, the indicated user is identified as a target of delegation, i.e., a user who performs processing subsequently. Therefore, users who process the workflow file can perform processing in a free order of processing, without being restricted to a defined order of processing, and indication can be performed by each user in a simple manner. Accordingly, flexibility in processing a workflow file increases, which improves user-friendliness.

It is noted that, in the above description, the workflow file shall be stored in management device 100, and each file processing device 300 shall access management device 100 to process that workflow file. However, as another example, a method may be adopted in which a workflow file itself is transferred among respective file processing devices 300. This also applies to a second embodiment which will be described later.

In this case, management device 100 may hold defining information of the workflow file, or may access file processing device 300 holding the workflow file to read defining information. Then, in above-described step S113, the target of delegation may be reported to file processing device 300A, while a command instructing transmission of the workflow file may be transmitted to file processing device 300B corresponding to the user targeted for delegation (to which the user has logged in or which is previously stored in association with that user).

### <Variation 1>

In the above-described example, management device 100 shall previously store operation table 162 defining correspondence between the direction indicated by the fly gesture and a user, and shall identify the user indicated by the fly gesture referring to operation table 162.

However, the method of identifying the user indicated by the fly gesture is not limited to this method. As another example, management device 100 may identify the user indicated by the fly gesture depending on the actual position of file processing device 300.

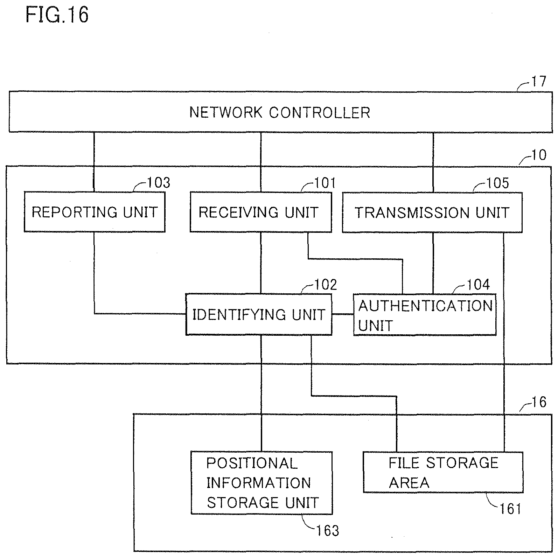

Fig. 16 is a block diagram showing a specific example of a functional configuration of management device 100 according to a variation of the first embodiment. Referring to Fig. 16, in order to identify the user indicated by the fly gesture as described above, management device 100 has stored therein a positional information storage unit 163 for previously storing positional information on each file processing device 300, instead of operation table 162. The positional information on each file processing device 300 may be input by a specific user, such as an administrator, or when each file processing device 300 has a function of acquiring its own positional information by GPS (Global Positioning System), may be acquired by requesting positional information from each file processing device 300 or necessary file processing device 300 at a timing when communication has been established through network 200, at a predetermined time interval, at a timing when the above-described operation information has been received, or the like.

In this case, when the fly gesture has been made, file processing device 300A identifies in which direction relative to itself that gesture has been made, and transmits the information to management device 100 as operation information.

CPU 10 of management device 100 in above-described Step S103 identifies the direction indicated by the fly gesture based on information showing in which direction from file processing device 300A the fly gesture included in the operation information has been made and the positional information on that file processing device 300A. Then, in above-described Step S107, the direction from the position of file processing device 300A to the position of each file processing device 300 is compared with the identified direction, thereby identifying corresponding file processing device 300B. Thereafter, an operation similar to that shown in Fig. 15 will be performed.

With file processing system 1 configured in this manner, a user can delegate authority to a subsequent user by intuitively making a fly gesture toward file processing device 300 corresponding to the subsequent user, without finding out the correspondence between the direction indicated by the fly gesture and the user.

### <Variation 2>

It is noted that, although in the above examples and the first variation, the user targeted for delegation shall be indicated by the fly gesture, the fly gesture is merely an example of the second gesture as described above, and is not limited to such a gesture.

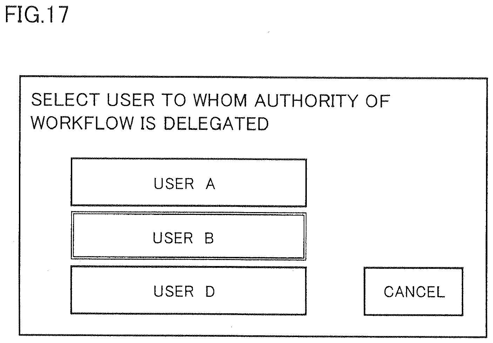

As another example, by performing the first gesture described as the pinch-in gesture in the above examples to report from file processing device 300A to management device 100 that the authority over the workflow file is delegated to another user, a user to whom the authority can be delegated may be extracted in management device 100 based on the defining information of the workflow file and may be reported to file processing device 300A. In this case, a selection screen presenting users (or file processing devices) available as targets of delegation as shown in Fig. 17 may be displayed on operation panel 34, and a target of delegation may be indicated from among them by receiving selection made by touching or the like, and information thereof may be transmitted from file processing device 300A to management device 100 as operation information. Thereafter, an operation similar to that shown in Fig. 15 will be performed.

Also with file processing system 1 configured in this manner, a user can easily indicate a subsequent user, without finding out a user defined as being able to process the workflow file subsequently.

### [Second Embodiment]

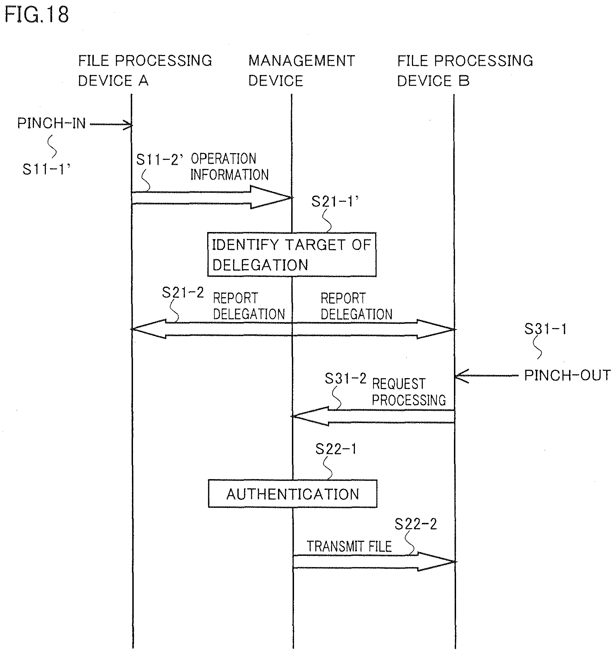

Fig. 18 shows the outline of an operation for file processing in file processing system 1 according to a second embodiment.

As a precondition, in the second embodiment, defining information included in a workflow file defines the order of processing of a workflow file, which is stored in file storage area 161 of memory 16 of management device 100.

Referring to Fig. 18, in file processing system 1 according to the second embodiment, a user having authority to process the workflow file performs the pinch-in gesture which is the first gesture for indicating termination of processing of the workflow on an icon presenting the workflow file in file processing device 300A (Step S1-1'), so that the body data and that the pinch-in gesture has been executed are transmitted to management device 100 as operation information (step S1 1-2').

Upon receipt of the information, management device 100 updates the body data of the workflow file stored in file storage area 161 with the received body data, while identifying the user defined as a user who will process the workflow file subsequently to the user who is operating file processing device 300A as a user targeted for delegation, referring to the defining information (step S12-1'). Thereafter, an operation similar to that of file processing system 1 according to the first embodiment will be performed. That is, a report is sent to file processing device 300A and file processing device 300B corresponding to the user targeted for delegation. Then, upon receipt of a request for processing from the user targeted for delegation, the body data of the workflow file will be transmitted to file processing device 300B.

### <Functional Configuration>

The functional configurations of file processing device 300 and management device 100 according to the second embodiment are generally similar to the functional configurations according to the first embodiment shown in Figs. 8 and 14, respectively. However, identifying unit 102 of management device 100 differs from identifying unit 102 of management device 100 according to the first embodiment in that it identifies a user defined as processing a workflow file subsequently to a user having made the pinch-in gesture, referring to defining information that defines the order of processing of the workflow file identified by operation information.

### <Flow of Operation>

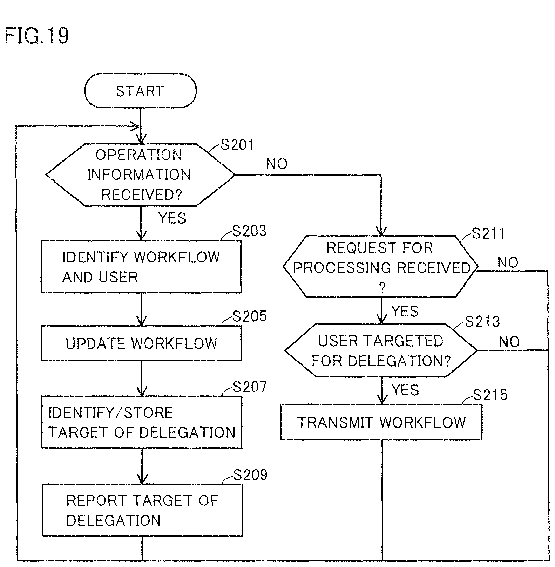

Fig. 19 is a flow chart showing a specific example of an operation in management device 100 according to the second embodiment. The operation shown in the flow chart of Fig. 19 is implemented by CPU 10 reading a program stored in ROM 11, executing the program on RAM 12, and causing the respective functions shown in Fig. 14 to be effected.

Referring to Fig. 19, upon receipt of operation information in accordance with the pinch-in gesture from file processing device 300A (YES in Step S201), CPU 10 in Step S203 identifies a target workflow file and a user having performed that gesture based on the received operation information. Then, in Step S205, CPU 10 updates the body data of the workflow file stored in file storage area 161 with the body data included in the received operation information, while updating the defining information of the workflow file assuming that the user having performed the above-described gesture has processed the workflow file.

In Step S207, CPU 10 identifies a user defined as the user who will process the workflow file subsequently to the user identified in above-described Step S203 referring to the defining information of the workflow file, and identifies the user as a user targeted for delegation and stores the user temporarily. Then, in Step S209, CPU 10 reports to file processing device 300A and file processing device 300B corresponding to the user identified in Step S207 (to which the user has logged in or which is stored previously in association with that user) that the user has been identified as the target of delegation.

A series of operations when operation information is received is then terminated, and the process is returned to the beginning, where receipt of information from file processing device 300 is waited for.

Upon receipt of information that requests processing of the workflow in accordance with the pinch-out gesture from file processing device 300B (NO in Step S201 and YES in Step S211), CPU 10 conducts authentication whether or not the login user of file processing device 300B having made that request matches the user identified as the target of delegation in above-described Step S207. As a result, when a match with the user identified as the target of delegation occurs (YES in Step S213), CPU 10 in Step S215 transmits the body data of the workflow to file processing device 300B.

A series of operations when operation information is received is then terminated, and the process is returned to the beginning, where receipt of information from file processing device 300 is waited for.

It is noted that this example also shows that, when the user having requested processing of the workflow file does not match the user identified as the target of delegation (NO in Step S213), Step S215 is skipped to return the process to the beginning. As another example, an error may be reported to file processing device 300B.

When a request for processing of the workflow file is not made within a prescribed time (e.g., one day, etc.) from the user targeted for delegation identified in above-described Step S207, a report may be sent again to the user targeted for delegation, or an error may be reported to file processing device 300A.

### <Effects of Embodiment>

With the above-described operations being performed in file processing system 1 according to the second embodiment, a user having processed a workflow file, even if it defines the order of processing, can easily delegate authority to a subsequent user without finding out a user who will perform processing subsequently.

### [Other Examples]

Further, a program for causing management device 100 to perform the above-described operations can also be offered. Such a program can be recorded on a computer-readable recording medium, such as a flexible disk attached to a computer, a CD-ROM (Compact Disk-Read Only Memory), a ROM, a RAM, a memory card, or the like, and can be offered as a program product. Alternatively, a program can be offered as recorded on a recording medium such as a hard disk built in a computer. Still alternatively, the program can also be offered by downloading through a network.

It is noted that the program according to the present invention may cause the process to be executed by invoking a necessary module among program modules offered as part of an operating system (OS) of a computer with a predetermined timing in a predetermined sequence. In that case, the program itself does not include the above-described module, but the process is executed in cooperation with the OS.
Such a program not including a module may also be covered by the program according to the present invention.

Moreover, the program according to the present invention may be offered as incorporated into part of another program. Also in such a case, the program itself does not include the module included in the above-described other program, and the process is executed in cooperation with the other program. Such a program incorporated into another program may also be covered by the program according to the present invention.

An offered program product is installed in a program storage unit, such as a hard disk, and is executed. It is noted that the program product includes a program itself and a recording medium on which the program is recorded.

Although the present invention has been described and illustrated in detail, it is clearly understood that the same is by way of illustration and example only and is not to be taken by way of limitation, the scope of the present invention being interpreted by the terms of the appended claims.

## Claims

1. A file processing system for processing a workflow file, comprising a plurality of file processing devices (300A, 300B, 300C) each having a touch panel (34) for receiving input of a user operation,
said workflow file including body data and defining information previously defining a plurality of users who can process the workflow file, each user corresponding to at least one of the plurality of file processing devices,
said file processing system further comprising:
an identifying unit (102) for, when a first file processing device among said plurality of file processing devices to which a first user who can process said workflow file logs in detects that a first gesture of identifying said workflow file and a second gesture performed to specify a second user who will process said workflow file subsequently have been performed on said touch panel, identifying a second file processing device corresponding to said second user based on said second gesture and said defining information included in said workflow file;
a reporting unit (103) for reporting, to said second file processing device among said plurality of file processing devices, that identification as a user who will process said workflow file subsequently has been made by said identifying unit (102); and
an acquisition unit (306) for, when said second file processing device detects that a third gesture for making a request for processing of said workflow file has been performed, causing said second file processing device to acquire said body data of said workflow file in accordance with said request; wherein
said first gesture is a pinch-in gesture of, continuously after two contacts are made on said touch panel, moving said two contacts in a direction that a spacing therebetween is decreased and then releasing said two contacts after being moved, and
said second gesture is a fly gesture of, continuously after at least one contact is made on said touch panel, moving said at least one contact toward an edge of said touch panel at a predetermined speed or higher, and then releasing said at least one contact at or near said edge of said touch panel;
said third gesture is a pinch-out gesture of, continuously after two contacts are made on said touch panel, moving said two contacts in a direction that the spacing therebetween is increased and then releasing said two contacts after being moved; and
said identifying unit (102) identifying said second user based on a direction in which said at least one contact is moved in said second fly gesture and said defining information included in said workflow file, wherein said identifying unit (102) previously stores correspondence between the direction in which said at least one contact is moved in said second fly gesture and a user and when the user corresponding to the direction in which said at least one contact is moved in said second fly gesture is defined by said defining information as the user who can process said workflow file, identifies the user corresponding to the direction in which said at least one contact is moved as said second user.

2. The file processing system according to claim 1, wherein said defining information included in said workflow file includes information as to whether or not said workflow file has been processed for each user who can process said workflow file,
said file processing system further comprising an updating unit (102A) for updating said defining information included in said workflow file in accordance with said first gesture, wherein
when the user identified by said second gesture has not yet processed said workflow file in said defining information, said identifying unit (102) identifies the user as said second user.

3. The file processing system according to claim 1 or 2, further comprising a management device (100), wherein said management device (100) includes said identifying unit (102) and said reporting unit (103), and
said management device (100) further includes a transmission unit (105) for, when said request is received from said second file processing device, transmitting said body data of said workflow file to said second file processing device.

4. The file processing system according to claim 3, wherein said management device (100) further includes an authentication unit (104) for conducting authentication to determine whether or not a logged-in user of said second file processing device having made said request is said second user, and
said transmission unit (105) transmits said body data of said workflow file when said authentication succeeds.

5. A management device for managing processing of a workflow file in a file processing device, comprising a communication controller (17) for controlling communications with a plurality of file processing devices (300A, 300B, 300C),
said workflow file including body data and defining information previously defining a plurality of users who can process the workflow file, each user corresponding to at least one of the plurality of file processing devices,
said management device further comprising:
an identifying unit (102) for, when information indicative that a first gesture of identifying said workflow file and a second gesture performed to specify a second user who will process said workflow file subsequently have been performed is received from a first file processing device among said plurality of file processing devices to which a first user who can process said workflow file logs in, identifying a second file processing device corresponding to said second user based on said second gesture and said defining information included in said workflow file;
a reporting unit (103) for reporting, to said second file processing device among said plurality of file processing devices, that identification as a user who will process said workflow file subsequently has been made by said identifying unit (102); and
a transmission unit (105) for, when information indicative that a third gesture for making a request for processing of said workflow file is received from said second file processing device, transmitting said body data of said workflow file to said second file processing device in accordance with said request;
wherein
said first gesture is a pinch-in gesture of, continuously after two contacts are made on said touch panel, moving said two contacts in a direction that a spacing therebetween is decreased and then releasing said two contacts after being moved;
said second gesture is a fly gesture of, continuously after at least one contact is made on said touch panel, moving said at least one contact toward an edge of said touch panel at a predetermined speed or higher, and then releasing said at least one contact at or near said edge of said touch panel;
said third gesture is a pinch-out gesture of, continuously after two contacts are made on said touch panel, moving said two contacts in a direction that the spacing therebetween is increased and then releasing said two contacts after being moved; and
said identifying unit (102) identifying said second user based on a direction in which said at least one contact is moved in said second fly gesture and said defining information included in said workflow file, wherein said identifying unit (102) previously stores correspondence between the direction in which said at least one contact is moved in said second gesture and a user and when the user corresponding to the direction in which said at least one contact is moved in said second gesture is defined by said defining information as the user who can process said workflow file, identifies the user corresponding to the direction in which said at least one contact is moved as said second user.

6. The management device according to claim 5, wherein said defining information included in said workflow file includes information as to whether or not said workflow file has been processed for each user who can process said workflow file,
said management device further comprising an updating unit (102A) for updating said defining information included in said workflow file based on said information received from said first file processing device, wherein when the user identified by said second gesture has not yet processed said workflow file in said defining information, said identifying unit (102) identifies the user as said second user.

7. A program for controlling a management device to cause said management device to execute a process of managing processing of a workflow file in a plurality of file processing devices connected communicably with one another,
said workflow file including body data and defining information previously defining a plurality of users who can process the workflow file, each user corresponding to at least one of the plurality of file processing devices,
wherein said program causes said management device to execute the following steps of:
when information indicative that a first gesture of identifying said workflow file and a second gesture performed to specify a second user who will process said workflow file subsequently have been performed is received from a first file processing device among said plurality of file processing devices to which a first user who can process said workflow file logs in, identifying a second file processing device corresponding to said second user based on said second gesture and said defining information included in said workflow file (S21-1);
reporting, to said second file processing device among said plurality of file processing devices, that identification as a user who will process said workflow file subsequently has been made in said step of identifying (S21-2); and
when information indicative that a third gesture for making a request for processing of said workflow file is received from said second file processing device, transmitting said body data of said workflow file to said second file processing device in accordance with said request (S22-2); wherein
said first gesture is a pinch-in gesture of, continuously after two contacts are made on said touch panel, moving said two contacts in a direction that a spacing therebetween is decreased and then releasing said two contacts after being moved;
said second gesture is a fly gesture of, continuously after at least one contact is made on said touch panel, moving said at least one contact toward an edge of said touch panel at a predetermined speed or higher, and then releasing said at least one contact at or near said edge of said touch panel;
said third gesture is a pinch-out gesture of, continuously after two contacts are made on said touch panel, moving said two contacts in a direction that the spacing therebetween is increased and then releasing said two contacts after being moved; and
said identifying of said second user is based on a direction in which said at least one contact is moved in said second fly gesture and said defining information included in said workflow file, wherein said identifying uses a previously stored correspondence between the direction in which said at least one contact is moved in said second fly gesture and a user and when the user corresponding to the direction in which said at least one contact is moved in said second fly gesture is defined by said defining information as the user who can process said workflow file, said identification identifies the user corresponding to the direction in which said at least one contact is moved as said second user.

## Patentansprüche

1. Dateiverarbeitungssystem zum Verarbeiten einer Workflowdatei, umfassend eine Vielzahl von Dateiverarbeitungsvorrichtungen (300A, 300B, 300C), welche jeweils ein Touch Panel (34) zum Empfangen einer Eingabe aus einem Benutzervorgang aufweist,
wobei die Workflowdatei Körperdaten und Definitionsinformationen beinhaltet, welche zuvor eine Vielzahl von Benutzern definieren, welche die Workflowdatei verarbeiten können, wobei jeder Benutzer zumindest einer aus der Vielzahl von Dateiverarbeitungsvorrichtungen entspricht,
wobei das Dateiverarbeitungssystem weiter umfasst:
eine Identifizierungseinheit (102) zum, wenn eine erste Dateiverarbeitungsvorrichtung unter der Vielzahl von Dateiverarbeitungsvorrichtungen, bei welcher sich ein erster Benutzer, welcher die Workflowdatei verarbeiten kann, anmeldet, erkennt, dass eine erste Geste zum Identifizieren der Workflowdatei und eine zweite Geste, welche ausgeführt wird, um einen zweiten Benutzer anzugeben, welcher die Workflowdatei verarbeiten wird, nacheinander auf dem Touch Panel ausgeführt wurden, Identifizieren einer zweiten Dateiverarbeitungsvorrichtung, welche dem zweiten Benutzer entspricht, auf Basis der zweiten Geste und den Definitionsinformationen, welche in der Workflowdatei beinhaltet sind;
eine Meldeeinheit (103) zum Melden, an die zweite Dateiverarbeitungsvorrichtung unter der Vielzahl von Dateiverarbeitungsvorrichtungen, dass Identifikation als ein Benutzer, welcher die Workflowdatei nachher verarbeiten wird, von der Identifizierungseinheit (102) erfolgt ist; und
eine Erfassungseinheit (306) zum, wenn die zweite Dateiverarbeitungsvorrichtung erkennt, dass eine dritte Geste zum Ausführen einer Anfrage zur Verarbeitung der Workflowdatei durchgeführt wurde, Veranlassen der zweiten Dateiverarbeitungsvorrichtung, die Körperdaten der Workflowdatei in Übereinstimmung mit der Anforderung zu erfassen; wobei
die erste Geste eine Zusammenziehen-Geste des, fortlaufend nachdem zwei Kontakte auf dem Touch Panel hergestellt wurden, Bewegens der zwei Kontakte in eine Richtung, sodass ein Abstand dazwischen verringert wird, und anschließend des Loslassens der zwei Kontakte, nachdem sie bewegt wurden, und
die zweite Geste eine Wischgeste des, fortlaufend nachdem zumindest ein Kontakt auf dem Touch Panel hergestellt wurde, Bewegens des zumindest einen Kontakts zu einem Rand des Touch Panels hin mit einer vorbestimmten oder höheren Geschwindigkeit, und anschließend des Loslassens des zumindest einen Kontakts am oder in der Nähe des Randes des Touch Panels;
die dritte Geste eine Auseinanderziehen-Geste des, fortlaufend nachdem zwei Kontakte auf dem Touch Panel hergestellt wurden, Bewegens der zwei Kontakte in eine Richtung, sodass der Abstand dazwischen vergrößert wird, und anschließend des Loslassens der zwei Kontakte, nachdem sie bewegt wurden; und
wobei die Identifizierungseinheit (102) den zweiten Benutzer auf Basis einer Richtung, in welcher der zumindest eine Kontakt in der zweiten Wischgeste bewegt wird, und der Definitionsinformationen, welche in der Workflowdatei beinhaltet sind, identifiziert, wobei die Identifizierungseinheit (102) zuvor Übereinstimmung zwischen der Richtung, in welche der zumindest eine Kontakt in der zweiten Wischgeste bewegt wird, und einem Benutzer speichert, und wenn der Benutzer, welcher der Richtung, in welche der zumindest eine Kontakt in der zweiten Wischgeste bewegt wird, entspricht, durch die Definitionsinformationen als der Benutzer definiert ist, welcher die Workflowdatei verarbeiten kann, den Benutzer, welcher der Richtung entspricht, in welche der zumindest eine Kontakt bewegt wird, als den zweiten Benutzer identifiziert.

2. Dateiverarbeitungssystem nach Anspruch 1, wobei
die Definitionsinformationen, welche in der Workflowdatei beinhaltet sind, Informationen darüber beinhalten, ob die Workflowdatei für jeden Benutzer, welcher die Workflowdatei verarbeiten kann, verarbeitet wurde oder nicht,
wobei das Dateiverarbeitungssystem weiter eine Aktualisierungseinheit (102A) zum Aktualisieren der Definitionsinformationen, welche in der Workflowdatei beinhaltet sind, in Übereinstimmung mit der ersten Geste umfasst, wobei
wenn der Benutzer, welcher durch die zweite Geste identifiziert wurde, die Workflowdatei noch nicht in den Definitionsinformationen verarbeitet hat, die Identifizierungseinheit (102) den Benutzer als den zweiten Benutzer identifiziert.

3. Dateiverarbeitungssystem nach Anspruch 1 oder 2, weiter eine Verwaltungsvorrichtung (100) umfassend, wobei
die Verwaltungsvorrichtung (100) die Identifizierungseinheit (102) und die Meldeeinheit (103) beinhaltet, und
die Verwaltungsvorrichtung (100) weiter eine Übertragungseinheit (105) zum, wenn die Anforderung von der zweiten Dateiverarbeitungsvorrichtung empfangen wird, Übertragen der Körperdaten der Workflowdatei an die zweite Dateiverarbeitungsvorrichtung, beinhaltet.

4. Dateiverarbeitungssystem nach Anspruch 3, wobei
die Verwaltungsvorrichtung (100) weiter eine Authentifizierungseinheit (104) zum Durchführen von Authentifizierung beinhaltet, um zu bestimmen, ob ein angemeldeter Benutzer der zweiten Dateiverarbeitungsvorrichtung, welcher die Anforderung gestellt hat, der zweite Benutzer ist oder nicht, und
die Übertragungseinheit (105) die Körperdaten der Workflowdatei überträgt, wenn die Authentifizierung erfolgreich ist.

5. Verwaltungsvorrichtung, um Verarbeiten einer Workflowdatei in einer Dateiverarbeitungsvorrichtung zu verwalten, umfassend eine Kommunikationssteuereinheit (17) zum Steuern von Kommunikation mit einer Vielzahl von Dateiverarbeitungsvorrichtungen (300A, 300B, 300C),
wobei die Workflowdatei Körperdaten und Definitionsinformationen beinhaltet, welche zuvor eine Vielzahl von Benutzern definieren, welche die Workflowdatei verarbeiten können, wobei jeder Benutzer zumindest einer aus der Vielzahl von Dateiverarbeitungsvorrichtungen entspricht,
wobei die Verwaltungsvorrichtung weiter umfasst:
eine Identifizierungseinheit (102) zum, wenn Informationen, welche angeben, dass eine erste Geste des Identifizierens der Workflowdatei und eine zweite Geste, welche ausgeführt wird, um einen zweiten Benutzer anzugeben, welcher die Workflowdatei verarbeiten wird, nacheinander ausgeführt wurden, von einer ersten Dateiverarbeitungsvorrichtung unter der Vielzahl von Dateiverarbeitungsvorrichtungen, bei der sich ein ersten Benutzer, welcher die Workflowdatei verarbeiten kann, anmeldet, empfangen wurden, Identifizieren einer zweiten Dateiverarbeitungsvorrichtung, welche dem zweiten Benutzer entspricht, auf Basis der zweiten Geste und den Definitionsinformationen, welche in der Workflowdatei beinhaltet sind;
eine Meldeeinheit (103) zum Melden, an die zweite Dateiverarbeitungsvorrichtung unter der Vielzahl von Dateiverarbeitungsvorrichtungen, dass Identifikation als ein Benutzer, welcher die Workflowdatei nachher verarbeiten wird, von der Identifizierungseinheit (102) erfolgt ist; und
eine Übertragungseinheit (105) zum, wenn Informationen, welche angeben, dass eine dritte Geste zum Ausführen einer Anfrage zur Verarbeitung der Workflowdatei von der zweiten Dateiverarbeitungsvorrichtung empfangen wurde, Übertragen der Körperdaten der Workflowdatei an die zweite Dateiverarbeitungsvorrichtung in Übereinstimmung mit der Anforderung; wobei
die erste Geste eine Zusammenziehen-Geste des, fortlaufend nachdem zwei Kontakte auf dem Touch Panel hergestellt wurden, Bewegens der zwei Kontakte in eine Richtung, sodass ein Abstand dazwischen verringert wird, und anschließend des Loslassens der zwei Kontakte, nachdem sie bewegt wurden;
die zweite Geste eine Wischgeste des, fortlaufend nachdem zumindest ein Kontakt auf dem Touch Panel hergestellt wurde, Bewegens des zumindest einen Kontakts zu einem Rand des Touch Panels hin mit einer vorbestimmten oder höheren Geschwindigkeit, und anschließend des Loslassens des zumindest einen Kontakts am oder in der Nähe des Randes des Touch Panels;
die dritte Geste eine Auseinanderziehen-Geste des, fortlaufend nachdem zwei Kontakte auf dem Touch Panel hergestellt wurden, Bewegens der zwei Kontakte in eine Richtung, sodass der Abstand dazwischen vergrößert wird, und anschließend des Loslassens der zwei Kontakte, nachdem sie bewegt wurden; und
wobei die Identifizierungseinheit (102) den zweiten Benutzer auf Basis einer Richtung, in welcher der zumindest eine Kontakt in der zweiten Wischgeste bewegt wird, und der Definitionsinformationen, welche in der Workflowdatei beinhaltet sind, identifiziert, wobei die Identifizierungseinheit (102) zuvor Übereinstimmung zwischen der Richtung, in welche der zumindest eine Kontakt in der zweiten Geste bewegt wird, und einem Benutzer speichert, und wenn der Benutzer, welcher der Richtung, in welche der zumindest eine Kontakt in der zweiten Geste bewegt wird, entspricht, durch die Definitionsinformationen als der Benutzer definiert ist, welcher die Workflowdatei verarbeiten kann, den Benutzer, welcher der Richtung entspricht, in welche der zumindest eine Kontakt bewegt wird, als den zweiten Benutzer identifiziert.

6. Verwaltungsvorrichtung nach Anspruch 5, wobei
die Definitionsinformationen, welche in der Workflowdatei beinhaltet sind, Informationen darüber beinhalten, ob die Workflowdatei für jeden Benutzer, welcher die Workflowdatei verarbeiten kann, verarbeitet wurde oder nicht,
wobei die Verwaltungsvorrichtung weiter eine Aktualisierungseinheit (102A) zum Aktualisieren der Definitionsinformationen, welche in der Workflowdatei beinhaltet sind, auf Basis der von der ersten Dateiverarbeitungsvorrichtung empfangenen Informationen umfasst, wobei
wenn der Benutzer, welcher durch die zweite Geste identifiziert wurde, die Workflowdatei noch nicht in den Definitionsinformationen verarbeitet hat, die Identifizierungseinheit (102) den Benutzer als den zweiten Benutzer identifiziert.

7. Programm zum Steuern einer Verwaltungsvorrichtung, um die Verwaltungsvorrichtung zu veranlassen, eine Verarbeitung zum Verwalten einer Verarbeitung einer Workflowdatei in einer Vielzahl von Dateiverarbeitungsvorrichtung auszuführen, welche kommunikativ miteinander verbunden sind,
wobei die Workflowdatei Körperdaten und Definitionsinformationen beinhaltet, welche zuvor eine Vielzahl von Benutzern definieren, welche die Workflowdatei verarbeiten können, wobei jeder Benutzer zumindest einer aus der Vielzahl von Dateiverarbeitungsvorrichtungen entspricht,
wobei das Programm die Verwaltungsvorrichtung veranlasst, die folgenden Schritte auszuführen:
wenn Informationen, welche angeben, dass eine erste Geste des Identifizierens der Workflowdatei und eine zweite Geste, welche ausgeführt wird, um einen zweiten Benutzer anzugeben, welcher die Workflowdatei verarbeiten wird, nacheinander ausgeführt wurden, von einer ersten Dateiverarbeitungsvorrichtung unter der Vielzahl von Dateiverarbeitungsvorrichtungen, bei der sich ein ersten Benutzer, welcher die Workflowdatei verarbeiten kann, anmeldet, empfangen wurden, Identifizieren einer zweiten Dateiverarbeitungsvorrichtung, welche dem zweiten Benutzer entspricht, auf Basis der zweiten Geste und der Definitionsinformationen, welche in der Workflowdatei (S21-1) beinhaltet sind;
Melden, an die zweite Dateiverarbeitungsvorrichtung unter der Vielzahl von Dateiverarbeitungsvorrichtungen, dass Identifikation als ein Benutzer, welcher die Workflowdatei nachher verarbeiten wird, in dem Schritt des Identifizierens (S21-2) erfolgt ist; und
wenn Informationen, welche angeben, dass eine dritte Geste zum Ausführen einer Anfrage zur Verarbeitung der Workflowdatei von der zweiten Dateiverarbeitungsvorrichtung empfangen wurde, Übertragen der Körperdaten der Workflowdatei an die zweite Dateiverarbeitungsvorrichtung in Übereinstimmung mit der Anforderung (S22-2); wobei
die erste Geste eine Zusammenziehen-Geste des, fortlaufend nachdem zwei Kontakte auf dem Touch Panel hergestellt wurden, Bewegens der zwei Kontakte in eine Richtung, sodass ein Abstand dazwischen verringert wird, und anschließend des Loslassens der zwei Kontakte, nachdem sie bewegt wurden;
die zweite Geste eine Wischgeste des, fortlaufend nachdem zumindest ein Kontakt auf dem Touch Panel hergestellt wurde, Bewegens des zumindest einen Kontakts zu einem Rand des Touch Panels hin mit einer vorbestimmten oder höheren Geschwindigkeit, und anschließend des Loslassens des zumindest einen Kontakts am oder in der Nähe des Randes des Touch Panels;
die dritte Geste eine Auseinanderziehen-Geste des, fortlaufend nachdem zwei Kontakte auf dem Touch Panel hergestellt wurden, Bewegens der zwei Kontakte in eine Richtung, sodass der Abstand dazwischen vergrößert wird, und anschließend des Loslassens der zwei Kontakte, nachdem sie bewegt wurden; und
wobei das Identifizieren des zweiten Benutzers auf einer Richtung, in welcher der zumindest eine Kontakt in der zweiten Wischgeste bewegt wird, und der Definitionsinformationen, welche in der Workflowdatei beinhaltet sind, basiert, wobei das Identifizieren zuvor gespeicherte Übereinstimmung zwischen der Richtung, in welche der zumindest eine Kontakt in der zweiten Wischgeste bewegt wird, und einem Benutzer verwendet, und wenn der Benutzer, welcher der Richtung, in welche der zumindest eine Kontakt in der zweiten Wischgeste bewegt wird, entspricht, durch die Definitionsinformationen als der Benutzer definiert ist, welcher die Workflowdatei verarbeiten kann, die Identifikation den Benutzer, welcher der Richtung entspricht, in welche der zumindest eine Kontakt bewegt wird, als den zweiten Benutzer identifiziert.

## Revendications

1. Système de traitement de fichier pour le traitement d'un fichier de flux de travail, comprenant une pluralité de dispositifs de traitement de fichier (300A, 300B, 300C) ayant chacun un écran tactile (34) pour recevoir une entrée d'une opération d'utilisateur,
ledit fichier de flux de travail incluant des données de corps et des informations de définition définissant préalablement une pluralité d'utilisateurs qui peuvent traiter le fichier de flux de travail, chaque utilisateur correspondant à au moins un de la pluralité de dispositifs de traitement de fichier,
ledit système de traitement de fichier comprenant en outre :
une unité d'identification (102) pour, quand un premier dispositif de traitement de fichier parmi ladite pluralité de dispositifs de traitement de fichier auquel se connecte un premier utilisateur qui peut traiter ledit fichier de flux de travail détecte qu'un premier geste d'identification dudit fichier de flux de travail et un deuxième geste effectué pour spécifier un second utilisateur qui traitera ledit fichier de travail subséquemment ont été effectué sur ledit écran tactile, identifier un second dispositif de traitement de fichier correspondant audit second utilisateur sur la base dudit deuxième geste et desdites informations de définition incluses dans ledit fichier de flux de travail ;
une unité de rapport (103) pour rapporter, audit second dispositif de traitement de fichier parmi ladite pluralité de fichiers de traitement de fichier, qu'une identification telle qu'un utilisateur qui traitera ledit fichier de flux de travail subséquemment a été effectuée par ladite unité d'identification (102) ; et
une unité d'acquisition (306) pour, quand ledit second dispositif de traitement de fichier détecte qu'un troisième geste pour effectuer une requête pour le traitement dudit fichier de flux de travail a été effectué, amener ledit second dispositif de traitement de fichier à acquérir lesdites données de corps dudit fichier de flux de travail conformément à ladite requête ; dans lequel
ledit premier geste est un geste de pincement de rapprochement pour, de manière continue après que deux contacts sont effectués sur ledit écran tactile, déplacer lesdits deux contacts dans une direction où un espacement entre eux est diminué et ensuite relâcher lesdits deux contacts après qu'ils aient été déplacés, et
ledit deuxième geste est un geste de mouvement d'effleurement pour, de manière continue après qu'au moins un contact est effectué sur ledit écran tactile, déplacer ledit au moins un contact vers un bord dudit écran tactile à une vitesse prédéterminée ou supérieure, et ensuite relâcher ledit au moins un contact au niveau ou près dudit bord dudit écran tactile ;
ledit troisième geste est un geste de pincement d'écartement pour, de manière continue après que deux contacts sont effectués sur ledit écran tactile, déplacer lesdits deux contacts dans une direction où l'espacement entre eux est augmenté et ensuite relâcher lesdits deux contacts après qu'ils aient été déplacés ; et
ladite unité d'identification (102) identifiant ledit second utilisateur sur la base d'une direction dans laquelle ledit au moins un contact est déplacé dans ledit deuxième geste de mouvement d'effleurement et desdites informations de définitions incluses dans ledit fichier de flux de travail, dans lequel ladite unité d'identification (102) stocke préalablement une correspondance entre la direction dans laquelle ledit au moins un contact est déplacé dans ledit deuxième geste de mouvement d'effleurement et un utilisateur et, quand l'utilisateur correspondant à la direction dans laquelle ledit au moins un contact est déplacé dans ledit deuxième geste de mouvement d'effleurement est défini par lesdites informations de définition comme l'utilisateur qui peut traiter ledit fichier de flux de travail, identifie l'utilisateur correspondant à la direction dans laquelle ledit au moins un contact est déplacé comme ledit second utilisateur.

2. Système de traitement de fichier selon la revendication 1, dans lequel
lesdites informations de définition incluses dans ledit fichier de flux de travail incluent des informations indiquant si ledit fichier de flux de travail a ou non été traité pour chaque utilisateur qui peut traiter ledit fichier de flux de travail,
ledit système de traitement de fichier comprenant en outre une unité de mise à jour (102A) pour mettre à jour lesdites informations de définition incluses dans ledit fichier de flux de travail conformément audit premier geste, dans lequel
quand l'utilisateur identifié par ledit deuxième geste n'a pas encore traité ledit fichier de flux de travail dans lesdites informations de définition, ladite unité d'identification (102) identifie l'utilisateur comme ledit second utilisateur.

3. Système de traitement de fichier selon la revendication 1 ou 2, comprenant en outre un dispositif de gestion (100), dans lequel
ledit dispositif de gestion (100) inclut ladite unité d'identification (102) et ladite unité de rapport (103), et
ledit dispositif de gestion (100) inclut en outre une unité de transmission (105) pour, quand ladite requête est reçue à partir dudit second dispositif de traitement de fichier, transmettre lesdites données de corps dudit fichier de flux de travail audit second dispositif de traitement de fichier.

4. Système de traitement de fichier selon la revendication 3, dans lequel
ledit dispositif de gestion (100) inclut en outre une unité d'authentification (104) pour réaliser une authentification pour déterminer si un utilisateur connecté dudit second dispositif de traitement de fichier ayant effectue ladite requête est ou non ledit second utilisateur, et
ladite unité de transmission (105) transmet lesdites données de corps dudit fichier de flux de travail quand ladite authentification réussit.

5. Dispositif de gestion pour la gestion du traitement d'un fichier de flux de travail dans un dispositif de traitement de fichier, comprenant un dispositif de commande de communication (17) pour commander des communications avec une pluralité de dispositifs de traitement de fichier (300A, 300B, 300C),
ledit fichier de flux de travail incluant des données de corps et des informations de définition définissant préalablement une pluralité d'utilisateurs qui peuvent traiter le fichier de flux de travail, chaque utilisateur correspondant à au moins un de la pluralité de dispositifs de traitement de fichier,
ledit dispositif de gestion comprenant en outre :
une unité d'identification (102) pour, quand des informations, indicatives du fait qu'un premier geste d'identification dudit fichier de flux de travail et un deuxième geste effectué pour spécifier un second utilisateur qui traitera ledit fichier de flux de travail subséquemment ont été effectués, sont reçues à partir d'un premier dispositif de traitement de fichier parmi ladite pluralité de dispositifs de traitement de fichier auquel se connecte un premier utilisateur qui peut traiter ledit fichier de flux de travail, identifier un second dispositif de traitement de fichier correspondant audit second utilisateur sur la base dudit deuxième geste et desdites informations de définition incluses dans ledit fichier de flux de travail ;
une unité de rapport (103) pour rapporter, audit second dispositif de traitement de fichier parmi ladite pluralité de dispositifs de traitement de fichier, qu'une identification telle qu'un utilisateur qui traitera ledit fichier de flux de travail subséquemment a été effectuée par ladite unité d'identification (102) ; et
une unité de transmission (105) pour, quand des informations, indicatives du fait qu'un troisième geste pour effectuer une requête pour le traitement dudit fichier de flux de travail est reçu à partir dudit second dispositif de traitement de fichier, transmettre lesdites données de corps dudit fichier de flux de travail audit second dispositif de traitement de fichier conformément à ladite requête ; dans lequel
ledit premier geste est un geste de pincement de rapprochement pour, de manière continue après que deux contacts sont effectués sur ledit écran tactile, déplacer lesdits deux contacts dans une direction où un espacement entre eux est diminué et ensuite relâcher lesdits deux contacts après qu'ils aient été déplacés ;
ledit deuxième geste est un geste de mouvement d'effleurement pour, de manière continue après qu'au moins un contact est effectué sur ledit écran tactile, déplacer ledit au moins un contact vers un bord dudit écran tactile à une vitesse prédéterminée ou supérieure, et ensuite relâcher ledit au moins un contact au niveau ou près dudit bord dudit écran tactile ;
ledit troisième geste est un geste de pincement d'écartement pour, de manière continue après que deux contacts sont effectués sur ledit écran tactile, déplacer lesdits deux contacts dans une direction où l'espacement entre eux est augmenté et ensuite relâcher lesdits deux contacts après qu'ils aient été déplacés ; et
ladite unité d'identification (102) identifiant ledit second utilisateur sur la base d'une direction dans laquelle ledit au moins un contact est déplacé dans ledit deuxième geste de mouvement d'effleurement et desdites informations de définitions incluses dans ledit fichier de flux de travail, dans lequel ladite unité d'identification (102) stocke préalablement une correspondance entre la direction dans laquelle ledit au moins un contact est déplacé dans ledit deuxième geste et un utilisateur et, quand l'utilisateur correspondant à la direction dans laquelle ledit au moins un contact est déplacé dans ledit deuxième geste est défini par lesdites informations de définition comme l'utilisateur qui peut traiter ledit fichier de flux de travail, identifie l'utilisateur correspondant à la direction dans laquelle ledit au moins un contact est déplacé comme ledit second utilisateur.

6. Dispositif de gestion selon la revendication 5, dans lequel
lesdites informations de définition incluses dans ledit fichier de flux de travail incluent des informations indiquant si ledit fichier de flux de travail a ou non été traité pour chaque utilisateur qui peut traiter ledit fichier de flux de travail,
ledit dispositif de gestion comprenant en outre une unité de mise à jour (102A) pour mettre à jour lesdites informations de définition incluses dans ledit fichier de flux de travail sur la base desdites informations reçues à partir dudit premier dispositif de traitement de fichier, dans lequel
quand l'utilisateur identifié par ledit deuxième geste n'a pas encore traité ledit fichier de flux de travail dans lesdites informations de définition, ladite unité d'identification (102) identifie l'utilisateur comme ledit second utilisateur.

7. Programme pour commander un dispositif de gestion pour amener ledit dispositif de gestion à exécuter un processus de gestion du traitement d'un fichier de flux de travail dans une pluralité de dispositifs de traitement de fichier connectés de manière communicative entre eux,
ledit fichier de flux de travail incluant des données de corps et des informations de définition définissant préalablement une pluralité d'utilisateurs qui peuvent traiter le fichier de flux de travail, chaque utilisateur correspondant à au moins un de la pluralité de dispositifs de traitement de fichier,
dans lequel ledit programme amène ledit dispositif de gestion à exécuter les étapes suivantes :
quand des informations, indicatives du fait qu'un premier geste d'identification dudit fichier de flux de travail et un deuxième geste effectué pour spécifier un second utilisateur qui traitera ledit fichier de travail subséquemment ont été effectués, sont reçues à partir d'un premier dispositif de traitement de fichier parmi ladite pluralité de dispositifs de traitement de fichier auquel se connecte un premier utilisateur qui peut traiter ledit fichier de flux de travail, l'identification d'un second dispositif de traitement de fichier correspondant audit second utilisateur sur la base dudit deuxième geste et desdites informations de définition incluses dans ledit fichier de flux de travail (S21-1) ;
le rapport, audit second dispositif de traitement de fichier parmi ladite pluralité de dispositifs de traitement de fichier, qu'une identification telle qu'un utilisateur qui traitera ledit fichier de flux de travail subséquemment a été effectuée dans ladite étape d'identification (S21-2) ; et
quand des informations, indicatives du fait qu'un troisième geste pour effectuer une requête pour le traitement dudit fichier de flux de travail est reçu à partir dudit second dispositif de traitement de fichier, la transmission desdites données de corps dudit fichier de flux de travail audit second dispositif de traitement de fichier conformément à ladite requête (S22-2) ; dans lequel
ledit premier geste est un geste de pincement de rapprochement pour, de manière continue après que deux contacts sont effectués sur ledit écran tactile, déplacer lesdits deux contacts dans une direction où un espacement entre eux est diminué et ensuite relâcher lesdits deux contacts après qu'ils aient été déplacés ;
ledit deuxième geste est un geste de mouvement d'effleurement pour, de manière continue après qu'au moins un contact est effectué sur ledit écran tactile, déplacer ledit au moins un contact vers un bord dudit écran tactile à une vitesse prédéterminée ou supérieure, et ensuite relâcher ledit au moins un contact au niveau ou près dudit bord dudit écran tactile ;
ledit troisième geste est un geste de pincement d'écartement pour, de manière continue après que deux contacts sont effectués sur ledit écran tactile, déplacer lesdits deux contacts dans une direction où l'espacement entre eux est augmenté et ensuite relâcher lesdits deux contacts après qu'ils aient été déplacés ; et
ladite identification dudit second utilisateur est basé sur une direction dans laquelle ledit au moins un contact est déplacé dans ledit deuxième geste de mouvement d'effleurement et desdites informations de définitions incluses dans ledit fichier de flux de travail, dans lequel ladite identification utilise une correspondance préalablement stockée entre la direction dans laquelle ledit au moins un contact est déplacé dans ledit deuxième geste de mouvement d'effleurement et un utilisateur et, quand l'utilisateur correspondant à la direction dans laquelle ledit au moins un contact est déplacé dans ledit deuxième geste de mouvement d'effleurement est défini par lesdites informations de définition comme l'utilisateur qui peut traiter ledit fichier de flux de travail, ladite identification identifie l'utilisateur correspondant à la direction dans laquelle ledit au moins un contact est déplacé comme ledit second utilisateur.
